# EUROPÄISCHE PATENTANMELDUNG

(11) **EP 0 769 650 A1**
(43) Veröffentlichungstag der Anmeldung: **23.04.1997**
(21) Anmeldenummer: 96114794.9
(22) Anmeldetag: 16.09.1996
(51) Int. Cl.: F16L 37/00, F16L 37/133

(54) **Vorrichtung zum Verbinden eines rohrförmigen Teils an einem Gehäuse, insbesondere in einer Sauganlage einer Brennkraftmaschine**

(30) Priorität: 19.10.1995 DE 19538923
(71) Anmelder: ROBERT BOSCH GMBH, 70442 Stuttgart (DE)
(72) Erfinder: Hezel, Bruno, 70565 Stuttgart (DE); Rosenbusch, Andreas-Bernd, 71404 Korb (DE)

(57) **Zusammenfassung**

Die Erfindung betrifft eine Vorrichtung zum Verbinden eines rohrförmigen Teils (13) an einem Gehäuse (11) mit wenigstens einem rohrförmigen Stutzen (12), an dem ein freies Ende (36) des rohrförmigen Teils (13) anordenbar ist, wobei eine Schnittstellenverbindung (14) zur Festlegung des rohrförmigen Teils (13) zu dem Gehäuse (12) als Schnappverbindung ausgebildet ist.

## Beschreibung

### Stand der Technik

Die Erfindung betrifft eine Vorrichtung zum Verbinden eines rohrförmigen Teils an einem Gehäuse gemäß dem Oberbegriff des Patentanspruchs 1.

Aus der Druckschrift WO 94/01673 ist eine Vorrichtung zur Aufnahme eines rohrförmigen Teils an einem Gehäuse für ein Abgasrückführventil bekannt. Diese Vorrichtung bildet eine Schnittstelle zwischen einem Sammler, in den Frischluft eingeleitet wird und einer Abgasrückführleitung, welche die heißen Gase dem Sammler zuführt. Die Vorrichtung weist ein im wesentlichen zylindrisches hitzebeständiges Rohr auf, welches in eine Öffnung des Sammlers ragt und zu dieser mediendicht abgeschlossen ist. Dafür ist an der Öffnung eine Muffe vorgesehen, die an dessen äußeren Ende eine umlaufende Dichtung aufweist. An dieser liegt ein an dem zylindrischen Rohr angeschweißter Flansch an und dichtet die Öffnung des Sammlers ab. Das Rohr wird von einer Seite in die Öffnung der Muffe eingeführt, so daß der Flansch dicht an der Dichtung anliegt. An der Öffnung selbst ist ein umlaufender Ring vorgesehen, der Hakenelemente aufweist, damit das rohrförmige Teil entgegen seiner Einsetzrichtung gegen Lösen gesperrt ist. Somit kann erzielt werden, daß der Flansch des zylindrischen Rohrs dicht an der Dichtung der Muffe anliegt. An dem außerhalb des Sammlers liegenden Ende des Rohres ist die Abgasrückführleitung anschließbar.

Eine derartige Vorrichtung weist jedoch den Nachteil auf, daß eine aufwendige Konstruktion und Anordnung von Dicht- und Hakenelementen vorgesehen sind, damit eine hitzebeständige und gasdichte Verbindung zwischen der Abgasrückführleitung und einem Sammler gegeben ist.

### Vorteile der Erfindung

Die erfindungsgemäße Vorrichtung mit den kennzeichnenden Merkmalen des Anspruchs 1 hat demgegenüber den Vorteil, daß eine einfache und kostengünstige Anordnung und Ausbildung einer Schnittstelle zwischen einem rohrförmigen Teil und einem Gehäuse vorgesehen ist. Durch die einfache Ausgestaltung einer Schnappverbindung kann eine erhebliche Kosteneinsparung durch eine schnelle Montage gegeben sein. Darüber hinaus ist auch eine Kosteneinsparung bei der Herstellung und der Prüfung einer derart einfach ausgebildeten Schnappverbindung gegeben.

Die erfindungsgemäße Anordnung einer Schnappverbindung hat desweiteren den Vorteil, daß eine gewichtssparende Ausgestaltung ermöglicht ist, durch die auch ermöglicht sein kann, daß eine sichere und gasdichte Anbindung des rohrförmigen Teils an dem Gehäuse gegeben ist.

Darüber hinaus ermöglicht die erfindungsgemäße Schnappverbindung, daß auf einfache Art und Weise eine hitzebeständige Ausgestaltung der Schnittstelle gegeben sein kann.

Eine vorteilhafte Ausführungsform der Erfindung ist die Ausbildung eines Rastelementes, das an dem freien Ende des rohrförmigen Teils und an einem Stutzen des Gehäuses anordenbar ist. Dadurch kann insgesamt eine einfache Anordnung und Ausgestaltung sowohl des freien Ende des rohrförmigen Teils als auch des an dem Gehäuse angeordneten Stutzen vorgesehen sein. Dadurch kann eine kostengünstige Herstellung der beiden Teile ohne Hinterschneidungen ermöglicht sein.

Eine weitere vorteilhafte Ausführungsform der Erfindung ist, daß an dem Stutzen des Gehäuses eine Aufnahme für das Rastelement vorgesehen ist. In einem Führungsabschnitt der Aufnahme ist das Rastelement einführbar und durch einen zu dem Führungsabschnitt beabstandet angeordneten Hakenelement in seiner Position festlegbar. Dadurch kann der an den Stutzen anschließbare rohrförmige Teil mit einem ebenfalls daran angeordneten Hakenelement zu dem Stutzen festgelegt und positioniert werden. Eine in dem Führungsabschnitt geordnete Ausnehmung, die zur Aufnahme des Rastelementes dient, weist vorteilhafterweise in dessen Einsteckrichtung Einführschrägen auf, damit eine leichte und schnelle Montage gegeben sein kann.

Eine weitere vorteilhafte Ausführungsform der Erfindung ist durch die an den freien Enden des Rastelementes zumindest abschnittsweise ausgebildeten Schrägflächen gegeben. Diese weisen den Vorteil auf, daß nach Einführen des Rastelementes in den Führungsabschnitt ein einfaches Aufgleiten des freien Endes an dem Hakenelement erfolgen kann, bevor es das Hakenelement hintergreift und in seiner Position festgelegt ist. Die an dem gegenüberliegenden Ende angeordnete Schrägfläche weist den Vorteil auf, daß nachdem das Rastelement in der Aufnahme angeordnet ist, lediglich ein lagerichtiges Aufschieben bzw. Aufstecken des freien Ende des rohrförmigen Teils auf den Stutzen erforderlich ist, um eine gesicherte Verbindung zwischen dem Gehäuse und dem rohrförmigen Teil zu ermöglichen. Diese Schrägfläche kann an einem an dem freien Ende des rohrförmigen Teils angeordneten Hakenelement aufgleiten und bei lagerichtiger Positionierung dieses hintergreifen. Ferner ist durch diese Schrägfläche eine einfache Demontage gegeben, da diese mit einem Gegenstand oder mit der Hand leicht hintergreifbar und anhebbar sein kann.

Eine weitere vorteilhafte Ausgestaltung der Erfindung ist durch die Ausgestaltung des Rastelementes als Blechbiegeteil gegeben. Dadurch kann auf einfache Weise eine hitzebeständige Schnappverbindung geschaffen werden. Darüber hinaus läßt sich ein derartiges Blechbiegeteil kostengünstig herstellen.

In den weiteren Unteransprüchen und in der nachfolgenden Beschreibung sind weitere vorteilhafte Ausführungsformen und Weiterbildungen der Erfindung angegeben.

### Zeichnung

Ein Ausführungsbeispiel der Erfindung ist in der Zeichnung dargestellt und in der nachfolgenden Beschreibung erläutert.
Es zeigen:
- Fig. 1: eine schematische Seitenansicht im Teilschnitt der erfindungsgemäßen Schnittstellenverbindung,
- Fig. 2: eine schematische Ansicht gemäß Pfeil X in Fig. 1,
- Fig. 3: eine schematische Draufsicht auf ein Rastelement und
- Fig. 4: eine schematische Seitenansicht des Rastelementes gemäß Fig. 3.

### Beschreibung des Ausführungsbeispiels

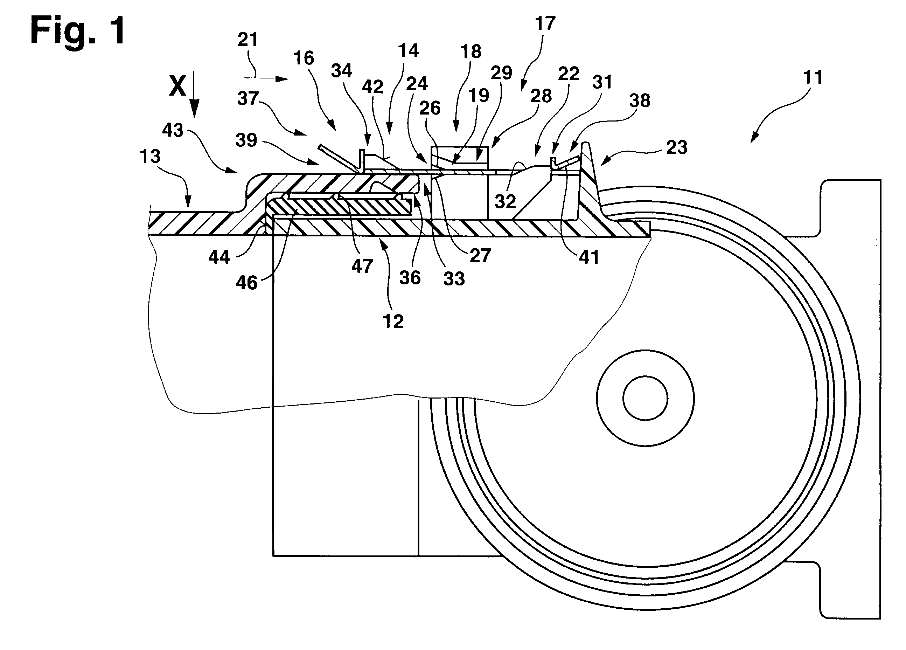

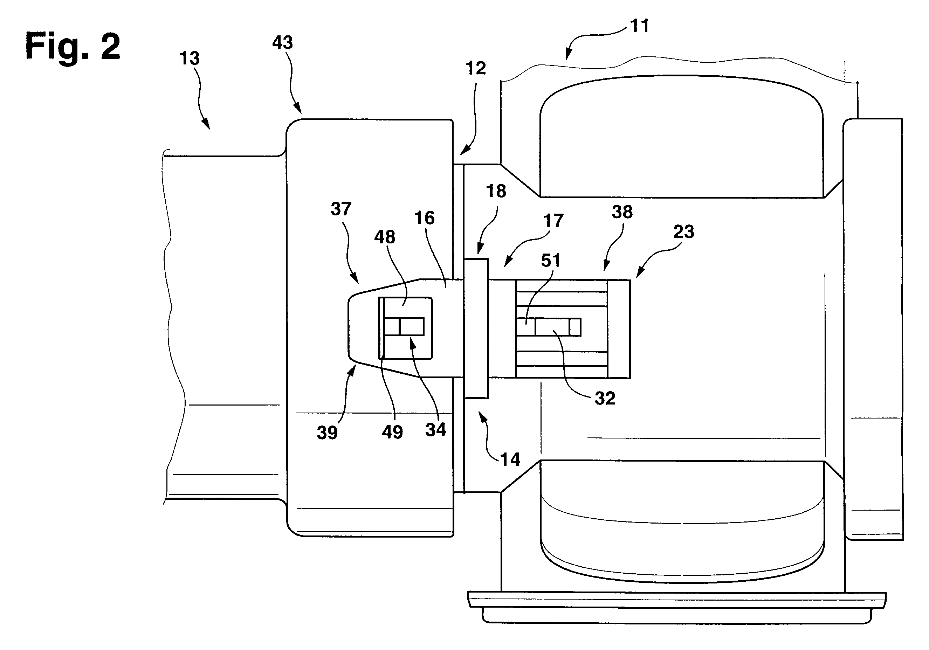

In Fig. 1 und Fig.2 ist ein Gehäuse 11 mit einem Stutzen 12 dargestellt, an dem ein rohrförmiges Teil 13 durch eine Schnittstellenverbindung 14 zu dem Stutzen 12 festgelegt ist. Eine derartige Anordnung wird beispielsweise bei Brennkraftmaschinen mit einer Abgasrückführung eingesetzt, wobei es sich, wie auch im Ausführungsbeispiel dargestellt ist, um ein Gehäuse des Abgasrückführventils handelt, an dem ein Ladeluftrohr anschließbar ist. Eine derartige Schnittstellenverbindung 14 ist jedoch nicht auf diesen Einsatzfall begrenzt, sondern weitläufig einsetzbar.

Die Schnittstellenverbindung 14 ist als Schnappverbindung ausgebildet und weist ein Rastelement 16 auf, das an einer an dem Stutzen 12 angeordneten Aufnahme 17 angeordnet ist. Die Aufnahme 17 weist einen Führungsabschnitt 18 mit einer Ausnehmung 19 auf, durch die das Rastelement 16 hindurchführbar ist. Das Rastelement 16 ist in Pfeilrichtung 21 in die Ausnehmung 19 des Führungsabschnittes 18 einführbar. Hinter dem Führungsabschnitt 18 in Pfeilrichtung 21 gesehen ist ein Hakenelement 22 vorgesehen, das vom Rastelement 16 in einer Rastposition hintergriffen wird. Zu dem Hakenelement 22 beabstandet ist ein Anschlag 23 vorgesehen, der die Bewegungsrichtung in Pfeilrichtung 21 des Rastelementes 16 begrenzt.

Der Führungsabschnitt 18 weist einen ersten Abschnitt 24 auf, der eine obere und untere Einführschräge 26, 27 aufweist. Ein dahinterliegender zweiter Abschnitt 28 der Ausnehmung 19 weist einen Querschnitt auf, der im wesentlichen dem Rastelement 16 entspricht, so daß dieses darin geführt ist. Desweiteren weist der Führungsabschnitt 18 einen dritten Abschnitt 29 auf, der im Verhältnis zu der Breite der Ausnehmung 19 schmal ausgebildet ist, so daß ein im wesentlich senkrecht nach oben stehender Abschnitt des Rastelementes 16 hindurchführbar ist, wie nachfolgend noch genauer beschrieben wird.

Die Aufnahme 17 mit den Komponenten Führungsabschnitt 18, Hakenelement 22 und Anschlag 23 ist einstückig zu dem Gehäuse 11 ausgebildet.

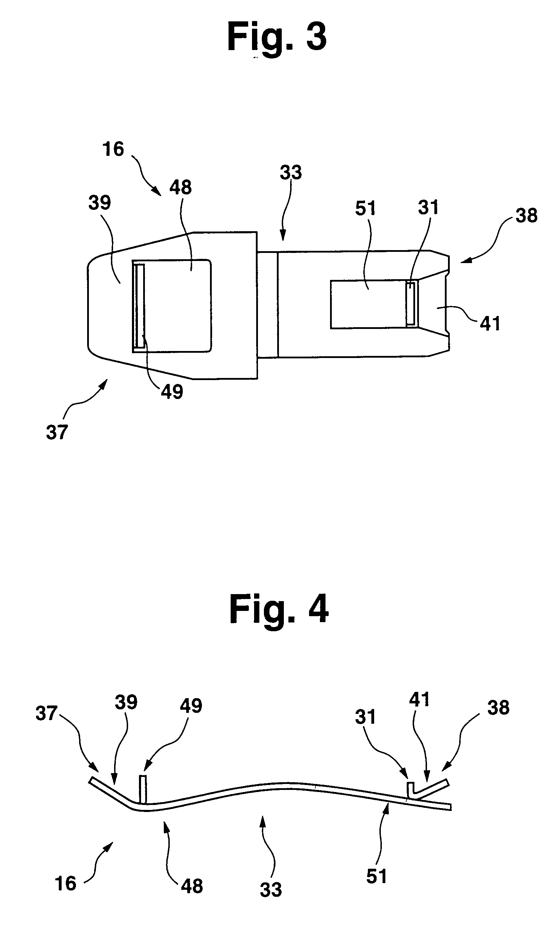

Das Rastelement 16 ist einstückig als einfaches Blechbiegeteil ausgebildet und kann in einem Arbeitsgang herstellbar sein. Durch die metallische Ausbildung ist eine gute Hitzebeständigkeit des Rastelementes 16 gegeben. Im Querschnitt gesehen weist das Rastelement 16 einen mittleren Bereich 33 auf, der im wesentlichen geradlinig ausgebildet ist und im Querschnitt gesehen einen dachförmigen Verlauf aufweist (Fig. 4), der im montierten Zustand bewirkt, daß das Rastelement 16 unter Spannung zu der Aufnahme 17 und dem rohrförmigen Teil 13 anordenbar ist. Gleichzeitig wird dadurch eine Sicherung erreicht, indem das Rastelement 16 mit Sicherheit hinter dem Hakenelement 22 der Aufnahme 17 und einem Hakenelement 37 an einem freien Ende des rohrförmigen Teils 13 vorgesehen ist.

An dem mittleren Abschnitt 33 schließt sich ein linkes und rechtes freies Ende 37, 38 an, die zumindest abschnittsweise eine gegenüber dem mittleren Abschnitt 33 nach oben gerichtete Schrägfläche 39, 41 aufweisen. An dem rechten Ende 38 des Rastelementes 16 liegt vor der Schrägfläche 41 ein senkrecht nach oben stehender Abschnitt 31, wodurch das Rastelement 16 das Hakenelement 22 hintergreifen kann und entgegen der Pfeilrichtung 21 gesperrt ist. Diese Schrägfläche 41 kann beim Einführen des Rastelementes 16 in Pfeilrichtung 21 an dem Hakenelement 22 aufgleiten und ist somit leicht auslenkbar. Darüber hinaus ist die Schrägfläche 41 mit dem senkrechten Abschnitt 31 in Längsrichtung derart bemessen, daß die Schrägfläche 41 im wesentlichen spielfrei zwischen dem Hakenelement 22 und dem Anschlag 23 anliegt, so daß das Rastelement 16 in seiner axialen Bewegungsrichtung fixiert ist. In Querrichtung ist das Rastelement durch den zweiten Abschnitt 28 in seiner Position festgelegt.

An dem linken freien Ende 37 ist die Schrägfläche 39 über die gesamte Breite des Rastelementes 16 ausgebildet. Dadurch ist zum einen eine leichte Demontage möglich, da diese Schrägfläche 39 einfach hintergreifbar ist und zum anderen kann beim Aufstecken des rohrförmigen Teils 13 auf den Stutzen 12 ein einfaches Aufgleiten der Schrägfläche 41 an einer Aufgleitfläche 42 des Hakenelementes 34 an dem rohrförmigen Teil 13 gegeben sein. Somit ist eine einfache Steck-/Schnappverbindung 14 gegeben, die darüber hinaus leicht demontierbar ist.

Das rohrförmige Teil 13 weist einen den Stutzen 12 übergreifenden vergrößerten Durchmesser 43 auf, wodurch eine radial verlaufende Anschlagfläche 44 ausgebildet ist. Zwischen dem rohrförmigen Teil 13 und dem Stutzen 12 ist ein Dichtelement 46 vorgesehen, das einen L-förmigen Querschnitt aufweist. Dieses Dichtelement 46 ist aus hitzebeständigem Material ausgebildet und bewirkt eine mediendichte Verbindung zwischen dem rohrförmigen Teil 13 und dem Stutzen 12. Der schmale Schenkel des L-förmigen Dichtelementes 46 kommt zwischen der Anschlagfläche 44 und dem diesen gegenüberliegenden Abschnitt des Stutzens 12 zum Anliegen. Dadurch wird ermöglicht, daß zwischen dem Hakenelement 34 des rohrförmigen Teils 13 und dem Rastelement 16 eine zumindest geringe axiale Spannung geschaffen werden kann, wodurch eine sichere Verbindung gegeben sein kann. Das Dichtelement 46 weist desweiteren einen zu einer Innenfläche des rohrförmigen Teil 13 weisende sägezahnförmige Erhöhungen 47 auf, die eine Radialabdichtung bewirken.

Das Gehäuse 11 weist zwei Schnittstellenverbindungen 14 auf, die um 180 Grad versetzt zueinander angeordnet sind. Bei der erfindungsgemäßen Ausgestaltung der Schnittstellenverbindung 14 als Rast-/Schnapp- bzw. als Clipsverbindung kann eine mediendichte Verbindung geschaffen sein. Alternativ können auch mehrere Schnittstellenverbindungen 14 über den Umfang verteilt an dem Gehäuse 11 vorgesehen sein, wobei diese vorteilhafterweise gleichmäßig über den Umfang verteilt an dem Gehäuse 11 angeordnet sind.

In den Fig.3 und Fig.4 ist das Rastelement 16 in einer Draufsicht und Seitenansicht dargestellt. Das Rastelement 16 weist an die Schrägfläche 39 anschließend eine Ausnehmung 48 auf, die an einer zum linken Ende 37 weisenden Seite einen senkrecht nach oben gerichteten Abschnitt 49 aufweist. Dieser hintergreift das Hakenelement 34 und legt das rohrförmige Teil 13 zu dem Rastelement 16 fest. Des weiteren weist das Rastelement 16 eine zweite Ausnehmung 51 auf, an die sich ebenfalls ein senkrechter Abschnitt 31 anschließt, der an einer zum rechten Ende 38 weisenden Seite der Ausnehmung 51 angeordnet ist. Dieser Abschnitt 31 hintergreift das Hakenelement 22, so daß ein Auseinanderziehen bzw. ein Abziehen des rohrförmigen Teils 13 von dem Stutzen 12 durch die beiden senkrechten Abschnitte 31, 49 verhindert ist.

## Patentansprüche

1. Vorrichtung zum Verbinden eines rohrförmigen Teils (13) an einem Gehäuse (11), insbesondere in einer Sauganlage einer Brennkraftmaschine, mit einem an dem Gehäuse (11) angeordneten rohrförmigen Stutzen (12), an dem ein freies Ende (36) des rohrförmigen Teils (13) anordenbar ist, dadurch gekennzeichnet, daß wenigstens eine das rohrförmige Teil (13) zu dem Gehäuse (11) festlegende Schnittstellenverbindung (14) als Schnappverbindung ausgebildet ist.

2. Vorrichtung nach Anspruch 1, dadurch gekennzeichnet, daß wenigstens zwei Schnittstellenverbindungen (14) an dem Gehäuse (11) vorgesehen sind, die vorzugsweise in gleichem Umfangswinkel am Stutzen (12) des Gehäuses (11) angeordnet sind.

3. Vorrichtung nach Anspruch 1 oder 2, dadurch gekennzeichnet, daß die Schnittstellenverbindung (14) ein Rastelement (16) aufweist, das an dem freien Ende (36) des rohrförmigen Teils (13) und an dem Stutzen (12) des Gehäuses (11) einrastbar anordenbar ist.

4. Vorrichtung nach einem der vorhergehenden Ansprüche, dadurch gekennzeichnet, daß an dem freien Ende (36) des rohrförmigen Teils (13) wenigstens ein radial nach außen abstehendes Hakenelement (34) vorgesehen ist.

5. Vorrichtung nach einem der vorhergehenden Ansprüche, dadurch gekennzeichnet, daß an dem Stutzen (12) eine das Rastelement (16) aufnehmende Aufnahme (17) vorgesehen ist, die wenigstens einen Führungsabschnitt (18) und ein hintergreifbares Hakenelement (22) aufweist.

6. Vorrichtung nach Anspruch 5, dadurch gekennzeichnet, daß an dem Führungsabschnitt (18) eine Ausnehmung (19) mit einem ersten Abschnitt (24) vorgesehen ist, der zumindest einer Einführschräge (26, 27) aufweist.

7. Vorrichtung nach einem der Ansprüche 5 oder 6, dadurch gekennzeichnet, daß der Führungsabschnitt (18) eine Ausnehmung (19) mit einem weiteren Abschnitt (28) aufweist, der das Rastelement (16) in radialer und tangentialer Richtung zu dem Stutzen (12) festlegt.

8. Vorrichtung nach einem der Ansprüche 5 bis 7, dadurch gekennzeichnet, daß zwischen der Ausnehmung (19) des Führungsabschnittes (18) und einer Mantelfläche des Stutzens (12) ein Abstand vorgesehen ist, der im wesentlichen einer Wandstärke des rohrförmigen Teils (13) und vorzugsweise einer Wandstärke eines zwischen dem rohrförmigen Teil (13) und dem Stutzen (12) angeordneten Dichtelementes (46) entspricht.

9. Vorrichtung nach einem der Ansprüche 5 bis 8, dadurch gekennzeichnet, daß die Aufnahme (17) einen zu dem Führungsabschnitt (18) und dem Hakenelement (22) beabstandeten Anschlag (23) aufweist.

10. Vorrichtung nach einem der Ansprüche 5 bis 9, dadurch gekennzeichnet, daß ein oberes Ende des Hakenelementes (22) oberhalb der Ausnehmung (19) des Führungsabschnittes (18) in radialer Richtung gesehen liegt.

11. Vorrichtung nach einem der Ansprüche 3 bis 10, dadurch gekennzeichnet, daß das Rastelement (16) eine vordere und hintere Ausnehmung (48, 51) aufweist, die jeweils an einer zum linken und rechten Ende (37, 38) weisenden Seite ein im wesentlichen senkrecht nach oben gerichteten Abschnitt (31, 49) aufweisen.

12. Vorrichtung nach einem der Ansprüche 3 bis 11, dadurch gekennzeichnet, daß an dem linken und rechten Ende (37, 38) des Rastelementes (16) zumindest abschnittsweise eine gegenüber dem mittleren Abschnitt (33) des Rastelementes (14) nach oben gerichtete Schrägfläche (39, 41) vorgesehen ist.

13. Vorrichtung nach einem der Ansprüche 3 bis 12, dadurch gekennzeichnet, daß das Rastelement (16) einen mittleren Abschnitt (33) aufweist, der einen über dessen Länge sich erstreckenden dachförmigen Verlauf aufweist.

14. Vorrichtung nach einem der Ansprüche 3 bis 13, dadurch gekennzeichnet, daß das Rastelement (16) als Blechbiegeteil einstückig ausgebildet ist.
